(19) Europäisches Patentamt
European Patent Office
Office européen des brevets

(11) Veröffentlichungsnummer : **0 454 108 B1**

(12) # EUROPÄISCHE PATENTSCHRIFT

(45) Veröffentlichungstag der Patentschrift :
**27.07.94 Patentblatt 94/30**

(51) Int. Cl.$^5$ : **C04B 41/87,** G02B 1/00

(21) Anmeldenummer : **91106662.9**

(22) Anmeldetag : **25.04.91**

(54) **Optische Formkörper aus Siliziumnitrid, sowie Verfahren zu deren Herstellung.**

(30) Priorität : **26.04.90 DE 4013306**

(43) Veröffentlichungstag der Anmeldung :
**30.10.91 Patentblatt 91/44**

(45) Bekanntmachung des Hinweises auf die Patenterteilung :
**27.07.94 Patentblatt 94/30**

(84) Benannte Vertragsstaaten :
**BE DE ES FR GB IT NL**

(56) Entgegenhaltungen :
**US-A- 4 457 958**
**WORLD PATENTS INDEX DATABASE, Woche 14, 1979, Nr. 79-27150B, Derwent Publications Ltd, London, GB; & JP-A-54 027 446 (TOKYO SHIBAURA ELEC. LTD) 01-03-1979**

(73) Patentinhaber : **HOECHST AKTIENGESELLSCHAFT**
**D-65926 Frankfurt (DE)**

(72) Erfinder : **Brück, Martin**
**Haneckstrasse 17**
**W-6238 Hofheim am Taunus (DE)**
Erfinder : **Vaahs, Tilo, Dr.**
**Am Flachsland 54**
**W-6233 Kelkheim/Taunus (DE)**
Erfinder : **Peuckert, Marcellus, Dr.**
**Platanenweg 8**
**W-6238 Hofheim am Taunus (DE)**
Erfinder : **Scheunemann, Ude, Dr.**
**Feldbergstrasse 12**
**W-6237 Liederbach (DE)**
Erfinder : **Stehlin, Thomas, Dr.**
**Ubierstrasse 11**
**W-6238 Hofheim am Taunus (DE)**
Erfinder : **Theis, Jürgen, Dr.**
**Weisskirchner Strasse 47**
**W-6370 Oberursel (DE)**

EP 0 454 108 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft optische Materialien aus Siliziumnitrid, Verfahren zu ihrer Herstellung durch Pyrolyse von polymeren Silazanen, sowie ihre Verwendung.

Das Siliziumnitrid enthaltende keramische optische Material wird durch Pyrolyse von Polysilazanen erhalten, welche zuvor zu den gewünschten Formkörpern verarbeitet werden. Eine oberflächliche oxidische Schicht kann durch den Pyrolyseprozeß eingestellt werden.

Die Pyrolyse von Polysilazanen zu siliziumnitrid-/siliziumcarbidhaltigem keramischen Material wurde bereits in der Literatur (Ceramic Bulletin, Vol. 62 (1983), 904-915) beschrieben. Zur Herstellung von Polysilazanen werden in der Regel Chlorsilane als Ausgangsmaterial eingesetzt und diese mit Ammoniak, primären oder sekundären Aminen oder mit Disilazan umgesetzt (US-A- 4 540 803, US-A- 4 543 344, US-A- 4 535 007, US-A- 4 482 669).

Eine weitere Methode zur Herstellung von Polysilazanen besteht in einer Umsetzung von Aminosilanen mit überschüssigem Ammoniak oder überschüssigem primären Amin. Die Aminosilane werden ihrerseits durch Umsetzung von Chlorsilanen mit Aminen hergestellt (FR-A -25 83 423). Beispielsweise entsteht aus Tetrachlorsilan $SiCl_4$ und Methylamin das Tetrakis(methylamino)silan $Si(NHCH_3)_4$;

$$SiCl_4 + 8\ CH_3NH_2 = Si(NHCH_3)_4 + 4\ CH_3NH_3Cl$$

Das Aminosilan wird anschließend mit überschüssigem Ammoniak umgesetzt, wobei alle Methylaminogruppen durch NH-Gruppen ersetzt werden. Es entstehen viskose bis hochviskose Polysilazane, die mit einer keramischen Ausbeute von 72 bis 79 Gew.% zu Siliziumnitrid enthaltendem Material pyrolysiert werden können. Der Nachteil dieses Verfahrens besteht in der Verwendung großer Mengen Alkylamin, welches dann zur Hälfte bei der Herstellung des Aminosilans als Alkylaminhydrochlorid wieder ausfällt. Die aus dem Aminosilan hergestellten Polymeren sind viskos und deshalb nur schwer zu verarbeiten; eine Faserherstellung ist nicht möglich.

Die Erzeugung einer oxidischen Schutzschicht durch oxidierende Nachbehandlung von Formkörpern aus gesintertem Siliziumnitridpulver ist bereits bekannt; die Verwendung als optisches Material ist dabei nicht erwähnt (US-A- 4457958).

Im Stand der Technik ist eine Vielzahl von optischen Materialien bekannt. Die bisher verwendeten Materialien (beispielsweise Glas, Polysiloxane, Polymethylmethacrylate (PMMA) etc.) haben alle den Nachteil, daß ihre Einsatzmöglichkeiten durch obere Temperaturgrenzen limitiert sind. So können Polymethylmethacrylate nur bis maximal 80 bis 90°C und Glas maximal bis 800°C eingesetzt werden.

Zusätzlich muß bei lichtoptischen Fasern eine die Fasern vollständig umgebende Schicht aufgebracht werden. Das Aufbringen derartiger Schichten, beispielsweise durch Eintauchen der Fasern in eine Lösung die ein Polymeres in gelöster Form enthält oder durch spezielle Spinnverfahren, ist aufwendig und kompliziert.

Es bestand daher die Aufgabe, ein einfaches Verfahren zur Herstellung optischer Formkörper zu finden, die sich durch eine gute Temperatur- und Chemikalienbeständigkeit sowie durch gute mechanische Eigenschaften auszeichnen.

Die vorliegende Erfindung löst diese Aufgabe.

Der Gegenstand der vorliegenden Erfindung ist ein Verfahren zur Herstellung von optischen Materialien aus Siliziumnitrid durch Pyrolyse von polymeren Silazanen, indem man die pulverförmigen polymeren Silazane vor der Pyrolyse zu Formkörpern preßt oder die polymeren Silazane zunächst in einem organischen Lösungsmittel löst, aus dieser Lösung Fasern zieht und diese nach Verdampfung des Lösungsmittels pyrolysiert, oder indem man Schmelzen von polymeren Silazanen herstellt, durch Gießen, Spritzgießen oder Extrudieren, diese Schmelzen zu Formkörpern verarbeitet und anschließend pyrolysiert, dadurch gekennzeichnet, daß während oder im Anschluß an die Pyrolyse auf den Siliziumnitridformkörpern in einer sauerstoffhaltigen Atmosphäre eine oxidische Schicht erzeugt wird. Die Pyrolyse findet vorzugsweise in einer ammoniakhaltigen oder Ammoniak/Inertgas-Gemische enthaltenden Atmosphäre bei Temperaturen von 800 bis 1400°C statt.

Der nach diesem Verfahren hergestellte aus Siliziumnitrid bestehende optische Formkörper mit einer oberflächlichen Schicht aus oxidischer Keramik besitzt bis maximal 1 % Kohlenstoff, maximal 2 % Wasserstoff und höchstens 10 % Sauerstoff, ist hoch transparent und amorph, wenn die Kristallisationstemperatur bei der Pyrolyse nicht überschritten wurde. Dagegen enthält das amorphe Siliziumnitrid teilweise Siliziumnitrid als kristalline Phase, für den Fall, daß die Kristallisationstemperatur bei der Pyrolyse überschritten wird. Die erfindungsgemäß hergestellten optischen Formkörper können bei Temperaturen über 800°C eingesetzt werden und eignen sich insbesondere für die Verwendung als optische Sensoren oder Lichtwellenleiter.

Die erfindungsgemäßen optischen Formkörper werden aus Polysilazanen, welche durch Pyrolyse in Siliziumnitrid überführt werden, hergestellt.

Als polymere Silazane sind sämtliche Silazane geeignet, die bei der Pyrolyse in Ammoniak enthaltender

Atmosphäre keramische Ausbeuten besitzen, die deutlich oberhalb 30 Gew.% liegen. Solche polymeren Silazane sind unter anderen in der US-A- 4 720 532 und der US-A- 4 482 669 und den Deutschen Offenlegungsschriften DE-A-3 733 727 und DE-A-3 737 921 beschrieben.

Ein derartiges Verfahren, welches zu festen Polysilazanen führt, die in gängigen Lösungsmitteln löslich und/oder schmelzbar sind und daher aus einer Lösung und/oder Schmelze versponnen werden können wird in der DE-A -3 737 921 beschrieben.

Als Ausgangsprodukte für die polymeren Silazane werden bei diesem Verfahren beispielsweise Dialkylaminodichlorsilane eingesetzt, welche aus Organyltrichlorsilan und Dialkylaminen erhalten werden können, und mit mindestens 3,5 Mol Ammoniak in aprotischen Lösungsmitteln bei Temperaturen zwischen -80°C bis +70°C umgesetzt werden.

Dabei reagiert ein Ammoniakmolekül zunächst mit zwei SiCl-Funktionen zu einer NH-Brücke zwischen den beiden Siliziumatomen:

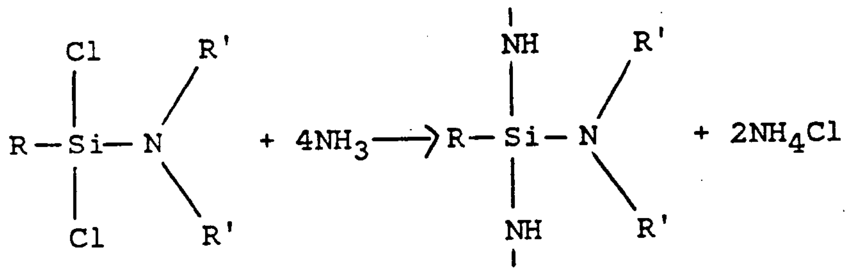

Dadurch entstehen oligomere Einheiten. Anschließend erfolgt eine teilweise Verdrängung der Dialkylaminogruppen vom Siliziumatom, so daß vernetzte polymere Silzanen entstehen. Dabei werden die endständigen Dialkylaminogruppen durch NH-Brücken ersetzt, so daß eine zusätzliche Vernetzung zustande kommt.

Die entstehenden polymeren Silazane lösen sich in allen gängigen aprotischen Lösungsmitteln und besitzen folgende Struktureinheiten:

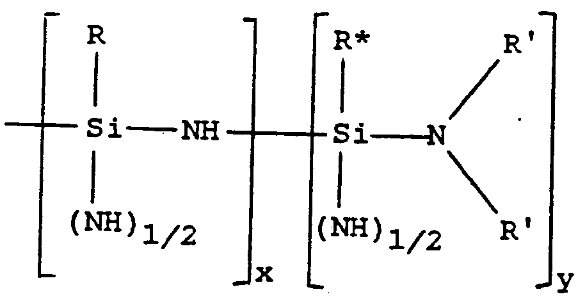

mit x + y = 1

wobei für R* dieselben Reste in Frage kommen wie für R, aber R und R* gleich oder verschieden sein können (verschieden, wenn mehr als ein Aminochlorsilan mit $NH_3$ umgesetzt wird).
R = $C_1$ - $C_4$-Alkyl, Vinyl oder Phenyl und
R'= $C_1$ - $C_4$-Alkyl
x und y bedeuten die Molfraktionen der beiden Struktureinheiten, wobei x + y = 1 und x = 0,7 - 0,95 ist.

Das steuerbare Verhältnis von x und y bestimmt hierbei den Vernetzungsgrad des Polymeren Silazans und damit die Viskosität und die Verarbeitbarkeit zur Keramik.

Bei der Pyrolyse derartiger Silazane entsteht amorphes, glasklares Siliziumnitrid mit Spuren von Kohlenstoff, Wasserstoff und Sauerstoff. Der Gehalt an Kohlenstoff liegt bei maximal 1 Gew.%, während Wasserstoff bis zu 2 Gew.% und Sauerstoff sogar bis zu 10 Gew.% anwesend sein kann.

Die Pyrolyse wird in einer ammoniakhaltigen oder Ammoniak/Inertgas-Gemische enthaltenden Atmosphäre durchgeführt. Als Inertgase eignen sich beispielsweise die Edelgase Argon und Helium, aber auch Stickstoff, vorzugsweise werden $NH_3$/Edelgasgemische verwendet. Die Pyrolysetemperaturen liegen im Bereich von 800 bis 1400°C. In Temperaturbereichen oberhalb 1200°C, insbesondere in Bereichen von 1200 bis 1400°C entstehen teilamorphe mikrokristalline keramische Werkstoffe, die als kristalline Phase α-Siliziumnitrid enthalten. Unterhalb 1200°C werden hochtransparente, farblose, reinamorphe Siliziumnitridformkörper erhalten.

Das Pyrolyseprodukt besteht bei diesem Verfahren je nach Pyrolysetemperatur aus praktisch rein amorphen (unterhalb 1200°C) oder teilkristallinem (oberhalb 1200°C) Siliziumnitrid.

Ein Vorteil der eingesetzten Polysilazane liegt in der Möglichkeit diese bereits vor der Pyrolyse zu dreidimensionalen Formkörpern zu formen. Die Formgebung kann hierbei zum Beispiel durch Extrudieren, Schlickergießen, Schmelzspinnen oder Verpressung von pulverförmigen Polysilazanen oder nach anderen bekannten Verfahren erfolgen.

Die auf diese Weise erhaltenen Formkörper aus Polysilazan werden einer Pyrolyse unterworfen, wobei der Körper während oder nach der Pyrolyse einer sauerstoffhaltigen Atmosphäre ausgesetzt und auf diese Weise eine oxidische Schicht auf diesem erzeugt wird. Auf diese Weise lassen sich Kern/Mantel Formkörper herstellen, die sich insbesondere für optische Anwendungszwecke einsetzen lassen.

Die Sauerstoffbehandlung kann bei den gleichen Temperaturen wie die Pyrolyse erfolgen, vorzugsweise oberhalb 1200°C insbesondere arbeitet man bei Temperaturen im Bereich von 1300°C bis 1400°C. Die Dicke der oxidischen Schicht läßt sich in einfacher Weise durch die Dauer der Sauerstoffbehandlung einstellen. Auf diese Weise ist es also möglich durch ein einfach durchzuführendes zeitsparendes Verfahren optische Gegenstände herzustellen, die eine ausgezeichnete Mantelhaftung am Kern aufweisen und die definierte Manteldurchmesser besitzen, ohne daß dieser in einem weiteren Verfahrensschritt auf die Formkörper aufgezogen wird.

Das erfindungsgemäß hergestelle optische Material kann nach geeigneter Formgebung insbesondere als Lichtwellenleiter eingesetzt werden.

Die Anforderung, daß der Mantel einen geringeren Brechungsindex als der Kern eines Lichtwellenleiters aufweisen muß wird von den erfindungsgemaß hergestellten Körpern erfüllt, da der Brechungsindex der äußeren sauerstoffhaltigen Keramikschicht im Bereich von 1,44 bis 1,55 liegt, während der der Silziumnitridphase bei 1,65 bis 2,00 (bei $\lambda$ = 546 nm), in Abhängigkeit vom Sauerstoffgehalt der Siliziumnitridkeramik liegt.

Ein weiterer Vorteil dieser so erhaltenen Körper liegt in ihrer guten Temperatur- und Chemikalienbeständigkeit sowie in ihren guten mechanischen Eigenschaften. So sind die auf diese Weise hergestellten Körper ohne weiteres bei Temperaturen oberhalb 800°C einsetzbar, halten sogar auf längere Zeit Temperaturen bis zu 1700°C aus und sind bei erhöhtem Stickstoffdruck sogar noch bei über 1800°C verwendbar.

Die erfindungsgemäßen Formkörper mit einer oxidischen Schicht können je nach Anwendungsgebiet zu verschiedenen Gegenständen geformt werden (beispielsweise zu Lichtwellenleitern, Prismen, Sensorelementen oder Linsen) und finden in allen Bereichen Anwendung in denen hohe optische Anforderungen gestellt werden.

## Beispiele

### Beispiel 1

Ein polymeres Hydridochlorsilazan, hergestellt nach der DE-A-3 733 727, wurde mittels einer 300 µm-Düse zu Fäden versponnen. Diese Fäden wurden in einer Ammoniakatmosphäre mit 2 vpm $0_2$ bis zu einer Endtemperatur von 1300°C pyrolysiert. Die erhaltenen Siliziumnitridfilamente besaßen einen Durchmesser von 100 µm und eine Elementzusammensetzung, die außer Silizium und Stickstoff noch 3,4 Gew.% Sauerstoff, 0,8 Gew.% Wasserstoff und 0,1 Gew.% Kohlenstoff beinhaltete.

Die Querschnittsflächen der Fasern wurden mittels energiedisperser Röntgenanalyse (Messung lokaler Konzentrationen von Elementen) untersucht. Dadurch wurde ersichtlich, daß an der Oberfläche der Fasern, d.h. am Randbereich der Querschnittsfläche, die Sauerstoffkonzentration höher als im Inneren der Fasern war.

Die Brechungsindices wurden mit einem Zweistrahlinterferenzmikroskop bestimmt:

Brechungsindex Randbereich $n_R = 1{,}443$

Brechungsindex Innenbereich $n_I = 1{,}652$

Damit ergibt sich für die numerische Apparatur NA = $\sqrt{n_I^2 - n_R^2}$

NA = 0,804

Die Messung der optischen Dämpfung ergab 2 dB/cm.

## Patentansprüche

1. Verfahren zur Herstellung von optischen Materialien aus Siliziumnitrid durch Pyrolyse von polymeren Silazanen, indem man die pulverförmigen polymeren Silazane vor der Pyrolyse zu Formkörpern preßt oder die polymeren Silazane zunächst in einem organischen Lösungsmittel löst, aus dieser Lösung Fasern zieht und diese nach Verdampfung des Lösungsmittel pyrolysiert oder durch Schmelzen von polymeren Silazanen, gießen, spritzgießen oder extrudieren dieser Schmelze zu Formkörpern und anschließender Pyrolyse, dadurch gekennzeichnet, daß während oder nach der Pyrolyse auf den Siliziumnitridformkörpern in einer sauerstoffhaltigen Atmosphäre eine oxidische Schicht erzeugt wird.

2. Verfahren nach Anspruch 1, dadurch gekennzeichnet, daß die Pyrolyse bei 800-1400°C in einer ammoniakhaltigen oder Ammoniak/Inertgas-Gemische enthaltenden Atmosphäre stattfindet.

3. Verfahren nach mindestens einem der Ansprüche 1-2, dadurch gekennzeichnet, daß die Kristallisationstemperatur bei der Pyrolyse nicht überschritten wird.

4. Verfahren nach mindestens einem der Ansprüche 1-2, dadurch gekennzeichnet, daß die Kristallisationtemperatur bei der Pyrolyse überschritten wird.

5. Verwendung von Formkörpern aus Siliciumnitrid, die nach dem Verfahren gemäß Anspruch 1 hergestellt wurden, als optische Formkörper.

6. Verwendung gemäß Anspruch 5, wobei das Siliziumnitrid bis zu 1 Gew.-% Kohlenstoff, bis zu 2 Gew.-% Wasserstoff und bis zu 10 Gew.-% Sauerstoff enthält.

7. Verwendung gemäß Anspruch 5, dadurch gekennzeichnet, daß das Siliciumnitrid transparent und amorph ist.

8. Verwendung gemäß Anspruch 5, dadurch gekennzeichnet, daß das Siliciumnitrid als kristalline Phase im Formkörper enthalten ist.

9. Verwendung von Formkörpern aus Siliciumnitrid, die nach dem Verfahren gemäß Anspruch 1 hergestellt wurden, als optische Sensoren oder Lichtweilenleiter.

## Claims

1. A process for the preparation of optical materials from silicon nitride by pyrolysis of polymeric silazanes, by pressing the pulverulent polymeric silazanes to give moldings before the pyrolysis or first dissolving the polymeric silazanes in an organic solvent, drawing fibers from this solution and pyrolyzing these fibers after evaporation of the solvent, or by melting polymeric silazanes, casting, injection-molding or extruding this melt to give moldings and subsequently pyrolyzing the moldings, which comprises producing an oxidic coating on the silicon nitride moldings in an oxygen-containing atmosphere during or after the pyrolysis.

2. The process as claimed in claim 1, wherein the pyrolysis is carried out at 800-1400°C in an atmosphere containing ammonia or an ammonia/inert gas mixture.

3. The process as claimed in at least one of claims 1 - 2, wherein the temperature does not exceed the crystallization point during the pyrolysis.

4. The process as claimed in at least one of claims 1 - 2, wherein the temperature exceeds the crystallization point during the pyrolysis.

5. The use of a molding made from silicon nitride, produced by the process as claimed in claim 1, as an optical molding.

6. The use as claimed in claim 5, wherein the silicon nitride contains up to 1 % by weight of carbon, up to 2 % by weight of hydrogen and up to 10 % by weight of oxygen.

7. The use as claimed in claim 5, wherein the silicon nitride is transparent and amorphous.

8. The use as claimed in claim 5, wherein the molding contains silicon nitride as a crystalline phase.

9. The use of a molding made from silicon nitride, produced by the process as claimed in claim 1, as an optical sensor or optical waveguide.

## Revendications

1. Procédé pour préparer des matériaux optiques à partir de nitrure de silicium par pyrolyse de silazanes polymères, dans lequel, avant la pyrolyse, on comprime pour obtenir des objets moulés les silazanes polymères en poudre, ou encore on dissout d'abord les silazanes polymères dans un solvant organique, on tire des fibres à partir de cette solution et on pyrolyse ces dernières après évaporation du solvant, ou encore, par fusion de silazanes polymères, coulée, moulage par injection ou extrusion, on transforme cette masse fondue en des objets moulés, avant de procéder à une pyrolyse, caractérisé en ce qu'il y a production d'une couche d'oxyde pendant ou après la pyrolyse sur les objets moulés en nitrure de silicium, dans une atmosphère oxygénée.

2. Procédé selon la revendication 1, caractérisé en ce que la pyrolyse a lieu à une température de 800 à 1400°C dans une atmosphère contenant de l'ammoniac ou des mélanges d'ammoniac et d'un gaz inerte.

3. Procédé selon au moins l'une des revendications 1 et 2, caractérisé en ce que la température, lors de la pyrolyse, ne dépasse pas la température de cristallisation.

4. Procédé selon au moins l'une des revendications 1 et 2, caractérisé en ce que la température, lors de la pyrolyse, dépasse la température de cristallisation.

5. Utilisation d'objets moulés en nitrure de silicium, préparés par le procédé selon la revendication 1, comme objets moulés optiques.

6. Utilisation selon la revendication 5, dans laquelle le nitrure de silicium contient jusqu'à 1 % en poids de carbone, jusqu'à 2 % en poids d'hydrogène et jusqu'à 10 % en poids d'oxygène.

7. Utilisation selon la revendication 5, caractérisée en ce que le nitrure de silicium est transparent et amorphe.

8. Utilisation selon la revendication 5, caractérisée en ce que le nitrure de silicium est contenu dans l'objet moulé sous forme d'une phase cristalline.

9. Utilisation d'objets moulés en nitrure de silicium, préparés par le procédé selon la revendication 1, comme capteurs optiques ou guides d'ondes lumineuses.